Europäisches Patentamt

(19) European Patent Office

Office européen des brevets

(11) Publication number: **0 090 859**

**B1**

(12) # EUROPEAN PATENT SPECIFICATION

(45) Date of publication of patent specification: **11.05.88**

(51) Int. Cl.⁴: **B 41 J 23/22**

(21) Application number: **82903540.1**

(22) Date of filing: **13.10.82**

(86) International application number:
**PCT/US82/01469**

(87) International publication number:
**WO 83/01417 28.04.83 Gazette 83/10**

(54) KEYBOARD ACTUATOR.

(30) Priority: **13.10.81 US 310580**

(43) Date of publication of application:
**12.10.83 Bulletin 83/41**

(45) Publication of the grant of the patent:
**11.05.88 Bulletin 88/19**

(84) Designated Contracting States:
**BE CH DE FR GB LI**

(56) References cited:
**DE-A-2 144 542**
**US-A-2 908 251**
**US-A-3 026 985**
**US-A-3 597 981**
**US-A-3 768 622**

(73) Proprietor: **HASENBALG, Ralph David**
**8635 Rudnick Avenue**
**Canoga Park, CA 91304 (US)**

(72) Inventor: **HASENBALG, Ralph David**
**8635 Rudnick Avenue**
**Canoga Park, CA 91304 (US)**

(74) Representative: **Harrison, David Christopher et al**
**MEWBURN ELLIS & CO 2/3 Cursitor Street**
**London EC4A 1BQ (GB)**

Courier Press, Leamington Spa, England.

## Description

The present invention relates generally to computer peripheral devices and more particularly to an actuator apparatus for actuating the keys of a keyboard in response to control signals which may be computer generated. Also disclosed is an improved latching fluid actuator device.

As the use of computers and microprocessors continues to increase, the types and configurations of keyboards associated therewith has also continued to expand. These keyboards include not only the well-known typewriter-like keyboard, but also keypads for numeric or control function input and special purpose keyboards as found in point-of-sale terminals.

With the increasing use of keyboards, there also arises a corresponding need to test the keyboards thoroughly. Although such tests can be done manually, testing of this nature can be time consuming and thus expensive. Moreover, manual testing presents the possibility that the person conducting the test may not accurately follow the test routine, resulting in keyboards that are not fully tested. Also, where the durability of a keyboard is to be tested by repeated actuation of the keys, manual testing is impractical because of the length of time required to complete such tests.

Therefore, there is a need for a keyboard actuator which can efficiently and effectively test various types of keyboards. It is further desirable that such an actuator be able to test a keyboard quickly and that the actuator be reliable and operable for long periods of time. Also, it is advantageous that such an actuator be relatively simple and mechanically sturdy to increase its reliability.

The keyboard actuator and fluid actuator of the present invention overcome the limitations and disadvantages described above, and provide a keyboard actuator that is both durable and reliable. The actuator is able to operate at relatively high speeds for sustained periods of time. The keyboard is adjustable to accommodate various keyboard configurations.

In the prior art, US—A—3026985 shows a keyboard tester with multiple actuators which are operated, in response to the movement of a perforated control strip, by the admission of fluid pressure to one side of a diaphragm the other side of which is maintained at a reduced pressure. In US—A—3597981 a plurality of actuators positioned over keys of a keyboard are operated by pneumatic pressure admitted by the movement of control valves in a control box. A given control valve may control a plurality of actuators for testing a corresponding plurality of keyboards. In US—A—2908251 a hydraulically driven actuator is shown which also has a hydraulically releasable lock or latch. Externally of the actuator, a liquid inlet for the piston of the actuator and an air inlet for the latch are interconnected so that they are operated together, thereby offering a precaution against premature operation of the actuator. In contrast, the present invention provides that a plurality of actuators, each being connected to two fluid pressure lines belonging respectively to two sets of pressure lines. Each set is controlled by a valve. Each actuator is only operated when valves corresponding to both of the sets of lines to which it is connected are operated. That is, each actuator has a unique pair of coordinates in the plurality.

More specifically, the actuator apparatus for controllably actuating selected keys of a keyboard-operated apparatus in response to signals from control means comprises a frame, a plurality of fluid actuators adapted to be associated with respective keys of the keyboard-operated apparatus, each of the plurality of fluid actuators including piston means; support means for supporting the plurality of fluid actuators from the frame and with respect to the keys, a first plurality of fluid conduits, each one of the first plurality of fluid conduits being in communication with one or more selected fluid actuators, first valve means for applying a fluid pressure from a fluid pressure source to a selected one of the first plurality of conduits selected in response to signals from the control means, a second plurality of fluid conduits, each one of the second plurality of fluid conduits being in fluid communication with one or more selected fluid actuators, second valve means for applying a fluid pressure from a fluid pressure source to a selected one of the second plurality of conduits selected in response to the signals from the control means; and each fluid actuator is only responsive when a specific set of the first plurality of fluid conduits and a specific set of the second plurality of fluid conduits is in communication with the fluid actuator to drive the piston member thereof to thereby actuate the selected key associated therewith. The fluid pressure in the selected ones of the first and second pluralities of fluid conduits may cause latch means in the fluid actuator to unlatch so that the piston may operate a key of the keyboard associated with the particular actuator.

The latching fluid actuator of the apparatus may be an unexpectedly simple device which can be, for example, injection moulded. The embodiment of the fluid actuator disclosed herein can include a piston having a rod and a latch element with a first member and a second member disposed on opposite sides of the piston rod. A third member of the latch element interconnects the first member and the second member. The piston rod includes engagement means such as a notch. A spring biases the first member of the latch element into engagement with the engagement means. A relatively simple fluid responsive member such as a diaphragm operates the second member of the latch element against the biasing force of the spring to unlatch the piston. The piston is then free to move under fluid pressure.

Thus, we disclose herein a reliable means for actuating a keyboard. The keyboard actuator can operate a keyboard at high rates of keystrokes-per-second for extended periods of time. The keyboard actuator may be adjusted for various keyboard sizes and surface inclinations. The use of fluid actuation also eliminates tolerance buildup which may be apparent in mechanical systems employing a number of mechanical elements to effect actuation of keyboard key. A latching fluid actuator advantageously allows the keyboard actuator to be operated in response to fluid pressure, thus minimizing the number of moving or sliding components and elements thereby decreasing overall complexity and increasing reliability. Furthermore the fluid actuator, performs a function similar to a logic AND, that is, the piston means does not move unless both drive fluid pressure and latch release fluid pressure are applied to the fluid actuator. This enables the fluid actuators to be arranged in the keyboard actuator as a matrix of rows and columns each controlled by a fluid valve. As such, a relatively few number of fluid valves can be used to control a larger number of fluid actuators, further decreasing the cost and complexity of the keyboard actuator apparatus.

In another aspect of the invention, a method for controllably actuating selected keys of a keyboard-operated apparatus in response to signals from control means comprises supporting a plurality of latching fluid actuators adapted to be associated with respective keys of a keyboard-operated apparatus, communicating a first fluid pressure through one of a plurality of first fluid conduits to said selected latching fluid actuator or actuators in response to the control means signals to release latch means within the selected latching fluid actuators, and communicating a second fluid pressure through one of a plurality of second fluid conduits to one or more selected latching fluid actuators in response to the control means signals to provide drive fluid pressure to piston means within the selected latching fluid actuator or actuators whereby said selected actuator or actuators associated with a selected key or keys selectively receives both the first fluid pressure and the second fluid pressure to unlatch the piston means and to drive the piston means to actuate the selected key of the keyboard with which it is associated.

In the drawings:

Figure 1 is a block diagram of a system which can utilize a keyboard actuator in accordance with the present invention;

Figure 2 is a perspective view of a keyboard actuator in accordance with the present invention;

Figure 3 is a cut away perspective view of adjustable mounting elements for latching fluid actuators within the keyboard actuator of Figure 2;

Figure 4 is a partial schematic representation of the fluid conduits, latching fluid actuators and fluid valves in the keyboard actuator of Figure 2;

Figure 5 is an exterior view of a latching fluid actuator used in the keyboard actuator of Figure 2;

Figure 6 is a cut away view of the latching fluid actuator of Figure 5; and

Figure 7 is an exploded view of the latching fluid actuator of Figures 5 and 6.

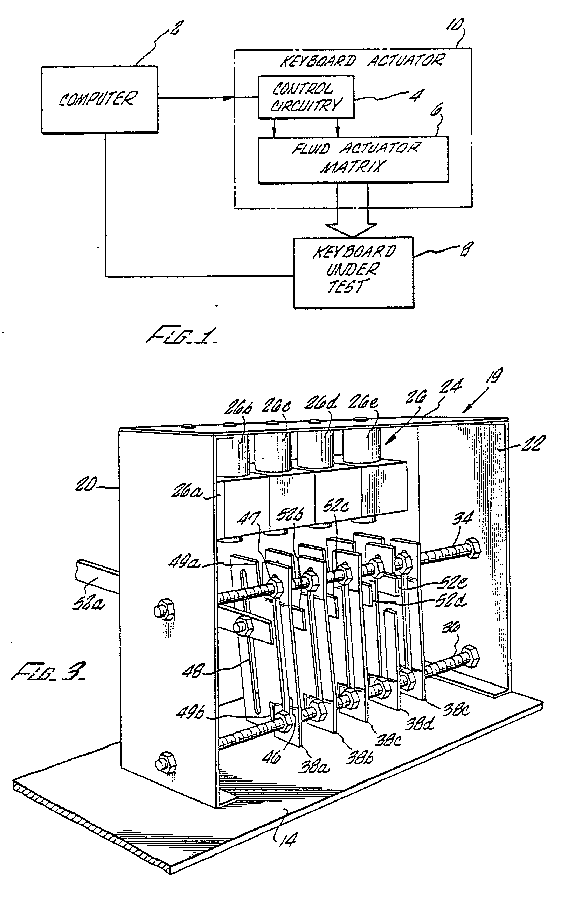

An overall system which may utilize a keyboard actuators in accordance with the present invention is shown in Figure 1. A computer 2 provides coded signals to a keyboard actuator 10. Control circuitry 4 within the actuator 10 receives the coded signals and decodes the signals to operate a fluid actuator matrix 6. The matrix 6 in turn drives a keyboard under test 8 by actuating the keys thereof. An output from the keyboard under test 8 to the computer 2 provides an indication of keyboard performance which is used to detect errors in keyboard operation.

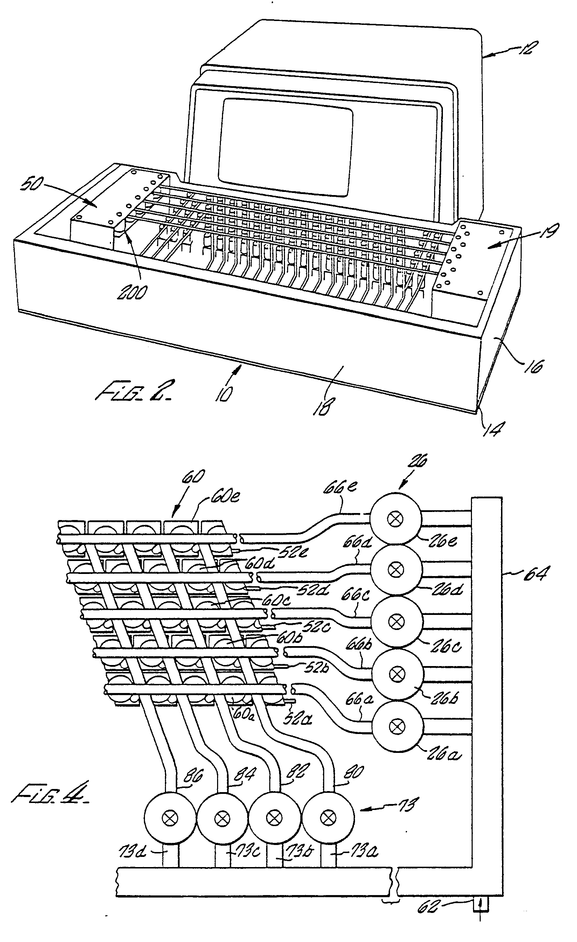

With reference now to Figure 2, the keyboard actuator 10 is adapted to be positioned over the keyboard under test (not shown) of, for example, a computer terminal 12. The keyboard actuator 10 has a bottom plate 14 to which are fixed three side panels, two of which are designated 16 and 18 in Figure 2. The third side panel is opposite the panel 16. The keyboard actuator 10 is opened at the side opposite the side panel 18 to receive the keyboard of the terminal 12.

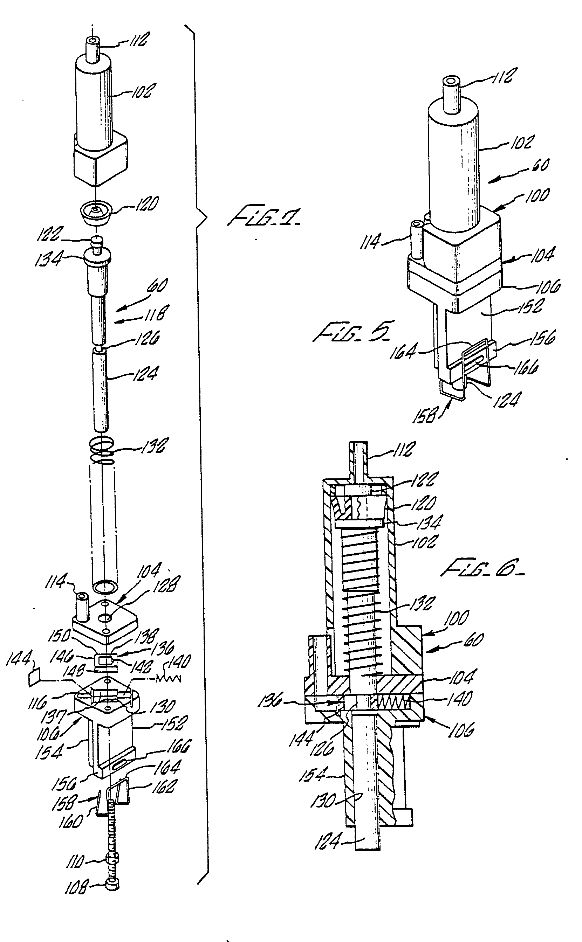

As shown in Figure 3 wherein side panel 16 has been removed, a fluid actuator support and adjustment mechanism 19 includes two support stanchions 20 and 22 that are fixed to the bottom plate 14. The stanchions 20 and 22 are parallel to each other and also parallel to the side panel 18. A solenoid support plate 24 is fixed to the top of the stanchions 20 and 22. A plurality of solenoid-operated fluid valves 26, individually designated 26a—26e, are supported by the support plate 24.

Two threaded rods 34 and 36 are fixed between the support stanchions 20 and 22. The upper threaded rod 34 is approximately midway between the bottom plate 14 and the solenoid support plate 24 while the lower threaded rod 36 is proximate the bottom plate 14. A plurality of actuator support plates 38a—38e are fixed to the threaded rods 34 and 36. Each of the actuator support plates 38a—38e includes an outer vertical elongated slot 46 and a similar inner vertical elongated slot 48. The upper and lower threaded rods 34 and 36 pass through the outer vertical elongated slots 46 of the actuator support plates 38a—38e.

The plates 38a—38e are secured to the threaded rods 34 and 36 by means of nuts 47 tightened on both sides of the plates 38a—38e. It is to be observed that by varying the location of the nuts 47 which secure the plates 38a—38e to the rods 34 and 36, the actuator support plates 38a—38e can be angled to match the angle of a keyboard. Also the position of the actuator support plates 38a—38e along the threaded rods 34 and 36 can be adjusted by the nuts 47 to adjust the spacing between the actuator support plates 38a—38e to correspond to the spacing between adjacent rows of keys on the keyboard to be tested.

Vertical notches 49a and 49b are formed at the upper and lower edges of the actuator support plates 38a—38e between the outer and inner vertical elongated slots 46 and 48. The vertical slots 49a and 49b allow the portion of the support plates 38a—38e fixed to the threaded rods 34 and 36 to be bent to be generally perpendicular to the threaded rods for a firm mechanical connection therebetween.

An actuator support and adjustment mechanism 50 similar to the mechanism 19 is disposed at the opposite end of the keyboard actuator 10. The adjustment mechanism 50 includes structure substantially similar to the elements just described with respect to the adjustment mechanism 19 in Figure 3.

Fixed between the mechanisms 19 and 50 are actuator support bars 52a—52e, the support bars being adjustably fixed between corresponding actuator support plates 38a—38e in the mechanism 19 and support plates in the mechanism 50. In the embodiment of Figure 3, the support bars 52a—52e are disposed generally vertically. The support bars 52a—52e are adjustably fixed to the inner vertical elongated slots 48 in the support plates 38a—38e and are similarly fixed to the inner vertical elongated slots in the corresponding support plates of the adjustment mechanism 50. The support bars 52a—52e can thus be adjusted to a position along these elongated slots which correctly positions the support bars 52a—52e at a predetermined height above the keyboard.

By adjusting the support plates 38a—38e along the threaded rods 34 and 36 as described above, with respect both to angle and position, the support bars 52a—52e can be positioned over rows of keys in the keyboard to be tested and can be angled to conform to the slant of the keyboard. The slots 49a and 49b at the upper and lower portions of the actuator support plates 38a—38e surrounding the inner vertical elongated slots 48 isolate the upper and lower ends of the inner vertical elongated slots 48 from the outer slots 46. When the portions of the plates 38a—38e are bent generally perpendicular to the threaded rods 34 and 36 as described above, the portions of the plates 38a—38e surrounding the inner slots 48 remain at the angle of the plates 38a—38e set with respect to the threaded bars 34 and 36, consequently setting the angle of the support bars 52a—52e.

As thus described above, the mechanisms 19 and 50 allow complete adjustment of the support rods 52a—52e so as to be adapted to the particular physical configuration of a variety of keyboards. The adjustments can be easily performed and can be changed repeatedly without degrading the performance of the keyboard actuator 10.

Turning now to Figures 3 and 4, each of the actuator support bars 52a—52e supports a plurality of latching fluid actuators designated generally 60. The actuators 60 are arranged in rows along the corresponding support bars 52a—52e. The spacing between adjacent ones of the actuators 60 is adjusted to conform to the spacing between the keys of the keyboard over which the keyboard actuator 10 is adapted to be placed.

As best seen schematically in Figure 4, a fluid inlet 62 provides fluid under pressure to a supply manifold 64. The supply manifold 64 is in turn in communication with the solenoid-operated fluid valves 26a—26e. A plurality of fluid conduits or manifolds 66a—66e are connected to the outputs of the valves 26a—26e respectively.

The manifold 66a is connected to a drive fluid inlet of each of the actuators 60 fixed to the actuator support bar 52a. Similarly, the fluid manifolds 66a—66e are connected to drive fluid inlets on the actuators 60 fixed to the actuator support bars 52b—52e, respectively. In this way, the conduits 66a—66e provide drive fluid pressure to respective rows of actuators 60 fixed on the actuator support bars 52a—52e.

A second plurality of solenoid-operated fluid valves 73 are connected to the supply manifold 64, four of these valves being designated 73a—73d in Figure 2. These valves, which may be fixed to the bottom plate 14, each have outputs connected to one of a plurality of fluid conduits or manifolds 79, four of which are designated 80—86 in Figure 2. Each of these conduits 79 supplies a latch release fluid inlet on five generally adjacent actuators 60 which can be considered as forming a column of actuators 60 on the actuator support bars 52a—52e. For example, the manifold 80 supplies the latch release fluid inlets on adjacent actuators 60a, 60b, 60c, 60d and 60e.

By way of brief summary, the fluid valves 26 can be considered as supplying fluid pressure to individual rows of actuators 60 while the plurality of valves 73 can be considered as supplying selected columns of the actuators 60. Thus, the valves 26 and 73 define an X—Y coordinate system or matrix, the valves 26 controlling the row or X coordinate with the valves 73 defining the column or Y coordinate of the system. The operation of the fluid valves is described further herein below.

Turning now to Figures 5—7, the latching fluid actuator 60 includes a housing 100 comprising a cylinder 102, a latch cover 104 and a base 106. Two self-tapping screws 108 and 110 hold the housing components together to form a completed actuator 60.

The cylinder 102 includes a drive fluid inlet 112 at the upper end thereof and the latch cover 104 includes a latch release fluid inlet 114. The drive fluid inlet 112 allows fluid communication into the cylinder 102 while the latch release fluid inlet 114 provides fluid communication through the latch cover 104 to a small chamber 116 in the base 106.

A piston 118 is carried within the cylinder 102. A U-cup seal 120 is fixed to a pin 122 at the top of the piston 118. The seal 120 provides a seal between the piston 118 and the inside surface of the cylinder 102. A piston rod 124 extends downwardly and includes an engagement means comprising a latch notch 126. As seen in Figures 5—7, the rod 124 extends through an opening 128 in the cover 104 and a second opening 130 in the actuator base 106. A piston return spring 132 is carried by the piston rod 124 between the cover 104 and a flange 134 at the upper end of the piston. The spring 132 biases the piston 118 upwardly as seen in Figures 5—7.

An unexpectedly simple latch release means is carried between the cover 104 and the base 106. This latch release means includes a latch member 136 carried in a cavity 137. The latch member has an opening 138 through which is passed the rod 124. A latch return spring 140 acting against a first member 142 biases the latch element 136 toward the rod 124. A latch diaphragm 144 is carried in slots formed into the latch cover 104 and the base 106. One side of the diaphragm 144 is in communication with the chamber 116. The second side of the diaphragm 144 acts against a second member 146 of the latch element 136. Two side members 148 and 150 of the latch element 136 connect the first member 142 to the second member 146 and define the opening 138.

A flat mounting tongue 152 extends downwardly from the base 106. The tongue 152 includes a guide 154 for the piston rod 124. A lip 156 projects from the lower edge of the mounting tongue 152. A resilient clip 158 of bent spring wire is adapted to fit over the lip 156 and tongue 152. The clip 158 includes two generally U-shaped spring portions 160 and 162 and a joining member 164 which connects the portions 160 and 162 such that the portions 160 and 162 are parallel.

The mounting tongue 152 is adapted to receive one of the actuator support bars 52a—52e (Figs. 2—4). The bar is received against the mounting tongue 152 between the base 106 and the lip 156. The clip 158 is initially installed onto the lip 156 such that the joining member 164 is above a projection 166 on the lip 156 to thereby retain the clip 158. Once the actuator 60 is installed on one of the support bars 52a—52e, the clip 158 is then moved upwardly to secure the actuator 60 to the support bar. This results in a simple, inexpensive and reliable mounting means for the actuator 60.

The operation of the latching fluid actuator 60 (Figs. 5—7) will first be considered. With no fluid pressure applied to the actuator 60, the spring 132 returns the piston 118 upwardly into the cylinder 102. Once the notch 126 is aligned with the first member 142 of the latch element 136, the spring 140 urges the first member 142 into engagement with the notch 126. This latches the piston 118 in a retracted position. Fluid pressure may then be applied to the drive fluid inlet 112 but the piston 118 will not be displaced in response thereto.

However, with fluid pressure applied to the latch release fluid inlet 114, the latch diaphragm 144 drives the latch element 136 against the bias of the spring 140 to thereby unlatch the piston 118. The movement of the latch element 136 is restricted by the dimensioning of the cavity 137 which carries the latch element 136. With the piston 118 released, fluid pressure applied through the drive fluid inlet 112 can move the piston 118 downwardly against the force of the spring 132, thereby extending the rod 124.

It is to be noted that fluid pressure applied to only one of the inlets, that is either the drive fluid inlet 112 or the latch release fluid inlet 114, does not cause displacement of the piston 118. Instead, fluid pressure must be applied to both of the inlets 112 and 114 in order to enable the movement of the piston 118. Moreover, it will be recognized that the fluid actuator 60 can be modified such the latching of the piston will only be accomplished when fluid pressure is applied to the diaphragm 144. To accomplish this, the spring 140 is arranged to bias the latch element 136 into the unlatched position, that is, the first member 142 is not engaged with the notch 126. The diaphragm 144 is then arranged to act against the first member 142 so that when fluid pressure is applied to the diaphragm 142, the piston 118 will be latched when the first member 142 is aligned with and thus engages the notch 126. Also, the fluid actuator 60 can be adapted to latch the piston 118 in various positions, such as extended or down, by changing the location of the notch 126 along the piston rod 124.

Suitable electronic control circuitry 4 is used to actuate selected ones of the valves 26 and the valves 73. The type of control circuitry used is not critical and may be similar, for example, to the system disclosed in U.S. Patent No. 4,146,336 issued to the applicant herein, the disclosure of which is incorporated herein by reference. Particularly, figure 4 of U.S. Patent No. 4,146,336 discloses circuitry which in substantial part may be used to drive the valves 26 and 73. It is to be noted that the "power solenoid" and the "Y latch solenoid" disclosed in figure 4 of the referenced patent would correspond to the solenoid controlled valves 26 and 73, respectively, as would be apparent to one of ordinary skill in the art. It is desirable that fluid pressure be applied to the latch release fluid inlet of the actuators 60 by one of the valves 73 slightly before the fluid pressure is applied by one of the valves 26 to the drive fluid inlets of the actuators 60. This allows the latch element 136 to be released before drive fluid pressure is applied to the piston 118.

It will also be apparent to those skilled in the art that the keyboard actuator 10 of the present invention may be controlled by microprocessor-based circuitry. The microprocessor advantageously can be reprogrammed to vary functions and to redefine the operation of the keyboard actuator 10.

The overall operation of the keyboard actuator 10 may now be summarized. With reference to figures 1, 4 and 6, the computer 2 provides to the control circuitry of the keyboard actuator 10 signals such as an ASCII code. The control circuitry in turn decodes the input and controls one of the solenoid valves 26 and one of the solenoid valves 73 to apply fluid pressure from the supply manifold 62 to the manifolds associated with the respective valves. One of the latching fluid actuators 60 thus receives both latch release fluid pressure and drive fluid pressure. Consequently, the latch element 136 of the selected fluid actuator 60 releases the piston 118 and the piston 118 is driven downwardly. The piston rod 124 can then contact a keyboard key to actuate the key.

As a specific example, the computer 2 may provide an ASCII code to control circuitry 4 corresponding to a letter "g". The control circuitry 4 may then actuator the valves 26b and 73a, applying fluid pressure to the manifolds 66b and 80. As noted previously, preferably the valve 73a is operated slightly before the valve 26b. The pressure in the manifold 80 is applied to all the fluid actuators 60a through 60e while the pressure in the manifold 66b is applied to all of the actuators 60 fixed to the actuator support bar 52b. However, only one of the fluid actuators 60a—60e receives both latch release fluid pressure and drive fluid pressure, that actuator being fluid actuator 60b. Consequently, the piston 118 in the actuator 60b is driven to depress the key associated therewith. By properly adjusting the positions of the actuators 60, this key is the "g" key of the keyboard being tested.

Once the key is actuated, the control circuitry 4 removes the control signals from the solenoid valves, such as the valves 26b and 73a described above. The valves remove fluid pressure from the associated manifolds 66b and 80 and vent these manifolds to atmosphere to completely release all fluid pressure applied to the associated actuator 60b. The return spring 132 in the actuator then drives the piston 118 upwardly until the latch element 136 engages the notch 126 to thereby latch the actuator, which in the example above is actuator 60b. In this way, a key actuation cycle is completed.

In the embodiment disclosed herein, solenoid valves 200 (Fig. 2) similar to the valves 26 are also provided at the second end of the manifolds 66a—66e, these valves being supported by the actuator support and adjustment mechanism 50. By providing two solenoid valves to the manifolds 66a—66e, decreased response time of the fluid actuators 60 is achieved while maintaining the overall fluid pressure in the system at a relatively low level. For example, the fluid may be pressurized air at approximately 10 to 30 lbs. per square inch gage.

**Claims**

1. An actuator apparatus (10) for controllably actuating selected keys of a keyboard-operated apparatus in response to signals from control means (4), the actuator apparatus comprising
    a frame,
    a plurality of fluid actuators (60) adapted to be associated with respective keys of the keyboard-operated apparatus, each of the plurality of fluid actuators including piston means
    support means (52) for supporting the plurality of fluid actuators from the frame and with respect to the keys,
    a first plurality of fluid conduits (79), each one of the first plurality of fluid conduits being in communication with one or more selected fluid actuators,
    first valve means (26) for applying a fluid pressure from a fluid pressure source to a selected one (e.g. 80) of the first plurality of conduits (79) selected in response to signals from the control means (4)
    a second plurality of fluid conduits, each one of the second plurality of fluid conduits being in fluid communication with one or more selected fluid actuators,
    second valve means (73) for applying a fluid pressure from a fluid pressure source to a selected one (e.g. 66a) of the second plurality of conduits (66a—66e) selected in response to the signals from the control means (4); and
    each fluid actuator is only responsive when a specific set of the first plurality of fluid conduits and a specific set of the second plurality of fluid conduits is in communication with the fluid actuator to drive the piston member (118) thereof to thereby actuate the selected key associated therewith.

2. An actuator apparatus as in claim 1, wherein each fluid actuator is responsive to a pair of fluid conduits (66a, 80), said pair of fluid conduits comprising one fluid conduit (e.g. 80) from the first plurality of fluid conduits and one fluid conduit (e.g. 66a) from the second plurality of fluid conduits, and wherein said pair of fluid conduits is unique for each fluid actuator.

3. An actuator apparatus according to claim 1 or claim 2 wherein each of the plurality of fluid actuators includes latch means (136) the latch means releasing the piston means (118) in response to fluid pressure in the respective one (80) of the first plurality of conduits in communication therewith and the piston means, when released by the latch means, being driven in response to fluid pressure in the respective one (66a) of the second plurality of conduits in communication therewith to thereby actuate the key associated with the fluid actuator.

4. An actuator apparatus according to claim 3 wherein the piston means includes a cylinder (102) closed at one end and a piston member (118) sealably carried within the cylinder and including a piston rod (124), the latch means includes a latch element (136) having a first member (142) and a second member (146) disposed on opposite sides of the piston rod and a third member (148, 150) interconnecting the first member (142) and the second member (146), fluid inlet means (112) for providing fluid communication from the respective one of the second plurality of fluid conduits through the cylinder closed end, spring means (140) biasing the latch element (136) to engagement with the piston member, the piston member (118) including engagement means (126) for receiving the latch to prevent piston member displacement, and a fluid responsive member acting against the latch element (136) and responsive to the fluid pressure in the respective one (80) of the first plurality of conduits in communication with the fluid actuator for operating the latch element (136) to disengage the latch from the engagement means (126).

5. An actuator apparatus as in claim 4 wherein the engagement means (126) comprises an indentation in the piston rod adapted to receive the second member (146) to prevent piston member displacement.

6. An actuator apparatus according to any one of the preceding claims wherein the fluid actuators (60) are arranged in a matrix having rows and columns and the first plurality of conduits individually are in communication with respective ones of the rows and the second plurality of conduits individually are in communication with respective ones of the columns.

7. An apparatus according to any one of the preceding claims wherein the frame includes a base plate (14) and the support means includes

two support stanchions (20, 22) fixed to the base plate and extending therefrom,

at least one rod (34, 36) fixed to and extending between the support stanchions,

a plurality of support plates (38a) disposed between the support stanchions and adjustably fixed to the rod to thereby adjust the support plates spacings and angles with respect to the support stanchions (20, 22) and

a plurality of actuator support bars (52a—e) fixed to the support plates, the support bars receiving and supporting the fluid actuators.

8. An apparatus as in claim 7 wherein the support plates (38a—3) include an elongated slot (48) and the actuator support bars (52a—e) are fixed to the support plates by fastener means through the slots to provide adjustment of the actuator support bars.

9. A method for controllably actuating selected keys of a keyboard-operated apparatus in response to signals from control means (4) comprising the steps of

supporting a plurality of latching fluid actuators (60) adapted to be associated with respective keys of a keyboard-operated apparatus,

communicating a first fluid pressure through one of a plurality of first fluid conduits (70) to said selected latching fluid actuator or actuators (60) in response to the control means signals to release latch means (136) within the selected latching fluid actuators, and

communicating a second fluid pressure through one of a plurality of second fluid conduits to one or more selected latching fluid actuators (60) in response to the control means signals to provide drive fluid pressure to piston means (118) within the selected latching fluid actuator or actuators whereby said selected actuator or actuators associated with a selected key or keys selectively receives both the first fluid pressure and the second fluid pressure to unlatch the piston means and to drive the piston means to actuate the selected key of the keyboard with which it is associated.

10. A method according to claim 9, wherein each latching fluid actuator is responsive to a pair of fluid pressures communicated through a pair of fluid conduits, said pair of fluid conduits comprising one fluid conduit (80) from the first plurality of fluid conduits and one fluid conduit (e.g. 66a) from the second plurality of fluid conduits, and wherein said pair of fluid conduits is unique for each fluid actuator.

11. A method according to claim 9 or claim 10, wherein the plurality of latching fluid actuators are disposed in a matrix of rows and columns and the step of communicating the first fluid pressure includes communicating the first fluid pressure to a selected row of the latching fluid actuators and the step of communicating the second fluid pressure includes communicating the second fluid pressure to a selected column of the latching fluid actuators.

12. An actuator apparatus according to claim 1 wherein the fluid actuators comprise

a cylinder (102) closed at one end and a piston member (118) sealably carried within the cylinder, the piston member including a piston rod (124) and engagement means (126),

first fluid inlet means (112) for providing fluid communication through the cylinder closed end,

a latch element (136) having first (142) and second (146) portions disposed on opposite sides of the piston rod and a portion (148, 150) interconnecting them,

a fluid responsive member (144) acting against the first or second portion of the latch element,

second fluid inlet means for providing fluid communication to the fluid responsive member,

spring means (140) for applying biasing force against the other of the first or second portions of the latch element, the latch element (136) being adapted to engage the piston member engagement means (126), the engagement means being for receiving the latch element (136) to prevent, in one position of the latter, piston member displacement, wherein said fluid actuator is only responsive when fluid communication through said first fluid inlet means and fluid communication through said second fluid inlet means are both provided to said fluid actuator.

13. An apparatus according to claim 12 wherein the fluid responsive member comprises a diaphragm (144).

14. An apparatus according to claim 12 or 13 wherein the latch element includes an opening (138) defined by the first, second and interconnecting portions (142, 146, 148, 150), the opening receiving the piston rod.

15. An apparatus according to claim 12, claim 13 or claim 14 including return spring means (132) for returning the piston member (118) toward the closed end of the cylinder.

16. A method of testing a keyboard using an apparatus according to any one of claims 1—8 or 12—15.

**Patentansprüche**

1. Betätigungsvorrichtung (10) zum gesteuerten Betätigen ausgewählter Tasten einer tastenbetätigten Vorrichtung in Abhängigkeit von Signalen einer Steuereinrichtung (4), wobei die Betätigungsvorrichtung besteht aus

einem Rahmen,

einer Vielzahl von Hydraulikbetätigern (60), die entsprechenden Tasten der tastenbetätigten Vorrichtung zugeordnet werden können, wobei jeder der Vielzahl von Hydraulikbetätigern einen Kolben aufweist,

Stützmitteln (52) zum Abstützen der Vielzahl von Hydraulikbetätigern von dem Rahmen und in Bezug auf die Tasten,

einer ersten Vielzahl von Flüssigkeitsleitungen (79), wobei jede Leitung der ersten Vielzahl von Flüssigkeitsleitungen mit einem oder mehreren ausgewählten Hydraulikbetätigern in Verbindung steht,

ersten Ventilen (26) zum Zuführen eines Flüssigkeitsdruckes von einer Flüssigkeitsdruckquelle zu einer ausgewählten Leitung (z.B. 80) der ersten Vielzahl von Leitungen (79), die in Abhängigkeit der Signale von der Steuereinrichtung (4) ausgewählt wurde,

einer zweiten Vielzahl von Flüssigkeitsleitungen, wobei jede Leitung der zweiten Vielzahl von Flüssigkeitsleitungen mit einem oder mehreren ausgewählten Hydraulikbetätigern in Strömungsverbindung steht,

zweiten Ventilen (73) zum Zuführen eines Flüssigkeitsdruckes von einer Flüssigkeitsdruckquelle zu einer ausgewählten Leitung (z.B. 66a) der zweiten Vielzahl von Leitungen (66a—66e), die in Abhängigkeit von den Signalen von der Steuereinrichtung (4) ausgewählte wurde; und

wobei jeder Hydraulikbetätiger nur dann anspricht, wenn eine bestimmte Gruppe der ersten Vielzahl von Flüssigkeitsleitungen und eine bestimmte Gruppe der zweiten Vielzahl von Flüssigkeitsleitungen mit dem Hydraulikbetätiger in Verbindung steht, um dessen Kolben (118) anzutreiben und dadurch die diesem zugeordnete ausgewählte Taste zu betätigen.

2. Betätigungsvorrichtung nach Anspruch 1, wobei jeder Hydraulikbetätiger auf zwei Flüssigkeitsleitungen (66a, 80) anspricht, wobei diese beiden Flüssigkeitsleitungen aus einer Flüssigkeitsleitung (z.B. 80) aus der ersten Vielzahl von Flüssigkeitsleitungen und aus einer Flüssigkeitsleitung (z.B. 66a) aus der zweiten Vielzahl von Flüssigkeitsleitungen besteht, und wobei diese beiden Flüssigkeitsleitungen jeweils nur zu einem einzigen Hydraulikbetätiger gehören.

3. Betätigungsvorrichtung nach Anspruch 1 oder 2, wobei jeder der Vielzahl von Hydraulikbetätigern einen Riegel (136) aufweist, wobei der Riegel den Kolben (118) freigibt, wenn in der damit in Verbindung stehenden zugehörigen Leitung (80) der ersten Vielzahl von Leitungen ein Flüssigkeitsdruck herrscht und der durch den Riegel freigegebene Kolben angetrieben wird, wenn in der damit in Verbindung stehenden betreffenden Leitung (66a) der zweiten Vielzahl von Leitungen ein Flüssigkeitsdruck herrscht, um dadurch die dem Hydraulikbetätiger zugeordnete Taste zu betätigen.

4. Betätigungsvorrichtung nach Anspruch 3, wobei die Hydraulikbetätiger einen an einem Ende verschlossenen Zylinder (102) und einen Kolben (118) umfaßt, der in dem Zylinder dichtend gelagert ist und eine Kolbenstange (124) aufweist, wobei der Riegel umfaßt ein Riegelelement (136), das ein erstes Teil (142) und ein zweites Teil (146) aufweist, die auf gegenüberliegenden Seiten der Kolbenstange angeordnet sind, und ein drittes Teil (148, 150), das das erste Teil (142) und das zweite Teil (146) miteinander verbindet, einen Flüssigkeitseinlaß (112), um eine Strömungsverbindung von der zugeordneten Leitung der zweiten Vielzahl von Flüssigkeitsleitungen durch das geschlossene Ende des Zylinders hindurch zu schaffen, eine Feder (140), die das Riegelelement (136) zum Eingriff mit dem Kolben belastet, wobei der Kolben (118) Eingriffsmittel (126) zur Aufnahme des Riegels aufweist, um eine Verlagerung des Kolbens zu vermeiden, und ein auf Flüssigkeitsdruck ansprechendes Teil, das gegen das Riegelelement (136) wirkt und auf den in der mit dem Hydraulikbetätiger in Verbindung stehenden entsprechenden Leitung (80) der ersten Vielzahl von Leitungen herrschenden Druck anspricht, um das Riegelelement (136) zu betätigen und den Riegel mit den Eingriffsmitteln (126) außer Eingriff zu bringen.

5. Betätigungsvorrichtung nach Anspruch 4, wobei die Eingriffsmittel (126) aus einer Vertiefung in der Kolbenstange bestehen, die das zweite Teil (146) aufnehmen kann, um eine Verlagerung des Kolbens zu verhindern.

6. Betätigungsvorrichtung nach einem der vorhergehenden Ansprüche, wobei die Hydraulikbetätiger (60) in einer Matrix angeordnet sind, die Reihen und Säulen aufweist, wobei jede Leitung der ersten Vielzahl von Leitungen mit einer zugeordneten Reihe in Verbindung steht, und wobei jede Leitung der zweiten Vielzahl von Leitungen jeweils mit einer zugeordneten Säule in Verbindung steht.

7. Vorrichtung nach einem der vorhergehenden Ansprüche, wobei der Rahmen eine Basisplatte (14) aufweist, und wobei die Stützeinrichtung aufweist

zwei Stützsäulen (20, 22), die an der Basisplatte befestigt sind und von dieser abstehen, mindestens eine Stange (34, 36), die an den Stützsäulen befestigt ist und sich zwischen diesen erstreckt,

eine Vielzahl von Stützplatten (38a), die zwischen den Stützsäulen angeordnet und an den Stangen einstellbar befestigt sind, um dadurch die Abstände und die Winkel der Stützplatten in Bezug auf die Stützsäulen (20, 22) einzustellen, und

eine Vielzahl von Betätiger-Stützstangen (52a—e), die an den Stützplatten befestigt sind, wobei die Stützstangen die Hydraulikbetätiger aufnehmen und abstützen.

8. Vorrichtung nach Anspruch 7, wobei die Stützplatten (38a—e) einen länglichen Schlitz (48) aufweisen und wobei die Betätiger-Stützstangen (52a—e) an den Stützplatten mit Befestigungselementen befestigt sind, die sich durch die Schlitze erstrecken, um eine Einstellung der Betätiger-Stützstangen zu ermöglichen.

9. Verfahren zur gesteuerten Betätigung ausgewählter Tasten einer tastenbetätigten Vorrichtung in Abhängigkeit von Signalen einer Steuereinrichtung (4), bestehend aus den Schritten

Abstützen einer Vielzahl von Verriegelungs-Hydraulikbetätigern (60), die betreffenden Tasten einer tastenbetätigten Vorrichtung zugeordnet werden können,

Verbinden eines ersten Flüssigkeitsdruckes durch eine Leitung einer Vielzahl von ersten Leitungen (79) mit dem oder den ausgewählten Verriegelungs-Hydraulikbetätigern (60) in Abhängigkeit von den Signalen der Steuereinrichtung, um Riegel (136) innerhalb der ausgewählten Verriegelungs-Hydraulikbetätiger auszurücken, und

Verbinden eines zweiten Flüssigkeitsdruckes durch eine Leitung einer Vielzahl von zweiten Flüssigkeitsleitungen mit einem oder mehreren ausgewählten Verriegelungs-Hydraulikbetätigern (60) in Abhängigkeit von den Signalen der Steuereinrichtung, um einem in dem oder den ausgewählten Verriegelungs-Hydraulikbetätigern angeordneten Kolben (118) einen Antriebs-Flüssigkeitsdruck zuzuführen, wodurch der oder die ausgewählten Betätiger, die einer oder mehreren ausgewählten Tasten zugeordnet sind, selektiv sowohl den ersten als auch den zweiten Flüssigkeitsdruck empfangen, um den Kolben zu entriegeln und anzutreiben, um die zugeordnete Taste der Tastatur, der er zugeordnet ist, zu betätigen.

10. Verfahren nach Anspruch 9, wobei jeder Verriegelungs-Hydraulikbetätiger auf zwei Flüssigkeitsdrücke anspricht, mit denen er über zwei Flüssigkeitsleitungen in Verbindung steht, wobei diese beiden Flüssigkeitsleitungen aus einer Flüssigkeitsleitung (80) aus der ersten Vielzahl von Flüssigkeitsleitungen und aus einer Flüssigkeitsleitung (z.B. 66a) aus der zweiten Vielzahl von Flüssigkeitsleitungen bestehen, und wobei jedem Flüssigkeitsbetätiger ein eigenes Paar Flüssigkeitsleitungen zugeordnet ist.

11. Verfahren nach Anspruch 9 oder 10, wobei die Vielzahl von Verriegelungs-Hydraulikbetätigern in einer aus Reihen und Säulen gebildeten Matrix angeordnet sind und wobei der Schritt des Verbindens des ersten Flüssigkeitsdruckes aus dem Verbinden des ersten Flüssigkeitsdruckes mit einer ausgewählten Reihe der Verriegelungs-Hydraulikbetätiger besteht, und wobei der Schritt des Verbindens des zweiten Flüssigkeitsdruckes aus dem Verbinden des zweiten Flüssigkeitsdruckes mit einer ausgewählten Säule der Verriegelungs-Hydraulikbetätiger besteht.

12. Betätigungsvorrichtung nach Anspruch 1, wobei die Hydraulikbetätiger bestehen aus

einem Zylinder (102), der an einem Ende geschlossen ist, und einem Kolben (118), der in dem Zylinder dichtend gelagert ist, wobei der Kolben eine Kolbenstange (124) und Eingriffsmittel (126) aufweist,

einem ersten Flüssigkeitseinlaß (112), um eine Flüssigkeitsverbindung durch das geschlossene Ende des Zylinders zu schaffen,

einem Riegelelement (136), das auf gegenüberliegenden Seiten der Kolbenstange angeordnete erste und zweite Bereiche (142 und 146) und einen diese verbindenen Bereich (148, 150) aufweist,

einem druckempfindlichen Bauteil (144), das auf den ersten oder zweiten Bereich des Riegelements einwirkt,

einem zweiten Flüssigkeitseinlaß, um eine Flüssigkeitsverbindung zu dem druckempfindlichen Bauteil zu schaffen,

einer Feder (140) zum Ausüben einer Federkraft auf den zweiten oder ersten Bereich des Riegelelements, wobei das Riegelelement (136) mit den Eingriffsmitteln (126) des Kolbens in Eingriff bringbar ist, wobei die Eingriffsmittel das Riegelelement (136) aufnehmen, um in einer Stellung desselben eine Verlagerung des Kolbens zu verhindern, wobei der Hydraulikbetätiger nur dann anspricht, wenn sowohl durch den ersten Flüssigkeitseinlaß als auch durch den zweiten Flüssigkeitseinlaß eine Flüssigkeitsverbindung zu diesem Hydraulikbetätiger besteht.

13. Vorrichtung nach Anspruch 12, wobei das druckempfindliche Bauteil eine Membran (144) ist.

14. Vorrichtung nach Anspruch 12 oder 13, wobei das Riegelelement eine von dem ersten Bereich, dem zweiten Bereich und den Verbindungsbereichen (142, 146, 148, 150) begrenzte Öffnung (138) aufweist, die die Kolbenstange aufnimmt.

15. Vorrichtung nach Anspruch 12, 13 oder 14 mit einer Rückstellfeder (132), um den Kolben (118) zum geschlossenen Ende des Zylinders zurückzubewegen.

16. Verfahren zum Testen einer Tastatur mit einer Vorrichtung nach einem der Ansprüche 1 bis 8 oder 12 bis 15.

**Revendications**

1. Appareil d'actionnement (10) pour actionner, de façon commandable, des touches choisies d'un appareil commandé par clavier en réponse à des signaux provenant de moyens de commande (4), ledit appareil comprenant:

un châssis,

—une pluralité de dispositifs d'actionnement à fluide (60) adaptés pour être associés à des touches respectives de l'appareil commandé par clavier, chacun desdits dispositifs d'actionnement à fluide comportant des moyens formant piston,

—des moyens de support (52) pour supporter la pluralité des dispositifs d'actionnement à fluide à partir du châssis et par rapport aux touches,

—une première pluralité de conduits de fluide (79), chacun desdits conduits étant en communication avec un ou plusieurs dispositifs d'actionnement à fluide choisis,

—des premiers moyens formant soupape (26) pour appliquer une pression de fluide à partir d'une source de fluide sous pression à un conduit choisi (par exemple 80) de la première pluralité de conduits (79) choisi en réponse aux signaux provenant des moyens de commande,

—une seconde pluralité de conduits de fluide, chacun desquels étant en communication de fluide avec un ou plusieurs dispositifs d'actionnement à fluide choisis,

—des seconds moyens formant soupape (73) pour appliquer une pression de fluide à partir d'une source de fluide sous pression à un conduit choisi (par exemple 66a) de la seconde pluralité de conduits (66a—66e) choisi en réponse aux signaux provenant des moyens de commande (4); et

—chaque dispositif d'actionnement à fluide est seulement sensible quand une série spécifique de la première pluralité de conduits de fluide et une série spécifique de la seconde pluralité de conduits de fluide sont en communication avec le dispositif d'actionnement à fluide pour entraîner l'organe formant piston (118) de celui-ci pour ainsi actionner la touche choisie qui lui est associée.

2. Appareil selon la revendication 1, dans lequel chacun des dispositifs d'actionnement à fluide est sensible à une paire de conduits de fluide (66a, 80), ladite paire de conduits de fluide comprenant un conduit de fluide (par exemple 80) de la première pluralité de conduits de fluide et un conduit de fluide (par exemple 66a) de la seconde pluralité de conduits de fluide, et dans lequel ladite paire de conduits de fluide est unique pour chaque dispositif d'actionnement à fluide.

3. Appareil selon la revendication 1 ou la revendication 2, dans lequel chacun de la pluralité de dispositifs d'actionnement à fluide comporte des moyens de verrouillage (136), les moyens de verrouillage libérant les moyens formant piston (118) en réponse à une pression de fluide dans le conduit respectif (80) de la première pluralité de conduits en communication avec ceux-ci, et les moyens formant piston, quand ils sont libérés par les moyens de verrouillage, étant entraînes en réponse à la pression de fluide dans le conduit respectif (66a) de la seconde pluralité de conduits en communication avec ceux-ci pour ainsi actionner la touche associée au dispositif d'actionnement à fluide.

4. Appareil selon la revendication 3, dans lequel les moyens formant piston comportent un cylindre (102) fermé à une extrémité et un organe de piston (118) logé de façon étanche à l'intérieur du cylindre et comportant une tige de piston (124), les moyens de verrouillage comportent un élément de verrouillage (136) ayant un premier organe (142) et un second organe (146) disposés sur des côtés opposés de la tige de piston et un troisième organe (148, 150) reliant le premier organe (142) et le second organe (146), des moyens d'entrée de fluide (112) pour établir la communication de fluide à partir du conduit respectif de la seconde pluralité de conduits de fluide à travers l'extrémité fermée du cylindre, des moyens formant ressort (140) sollicitant l'élément de verrouillage (136) pour s'engager avec l'organe de piston, l'organe de piston (118) comportant des moyens d'engagement (126) pour le verrouillage, pour éviter le déplacement de l'organe de piston, et un organe sensible à un fluide agissant contre l'organe de verrouillage (136) et sensible à la pression de fluide dans le conduit respectif (80) de la première pluralité de conduits en communication avec le dispositif d'actionnement à fluide pour actionner l'élément de verrouillage (136) pour le déverrouillage des moyens d'engagement (126).

5. Appareil selon la revendication 4, dans lequel les moyens d'engagement (126) comprennent une indentation dans la tige de piston adaptée pour recevoir le second organe (146) pour éviter le déplacement de l'organe de piston.

6. Appareil selon l'une quelconque des revendications précédentes, dans lequel les dispositifs d'actionnement à fluide (60) sont agencés en une matrice ayant des rangées et des colonnes, et la première pluralité de conduits sont, individuellement, en communication avec les rangées respectives et la seconde pluralité de conduits sont, individuellement, en communication avec les colonnes respectives.

7. Appareil selon l'une quelconque des revendications précédentes, dans lequel le châssis comporte une plaque de base (14) et les moyens de support comportent:

—deux étais de support (20, 22) fixés à la plaque de base s'étendant à partir de celle-ci,

—au moins une tige (34, 36) fixée aux étais de support et s'étendant entre aux,

—une pluralité de plaques de support (38a) disposées entre les étais de support et fixées de façon réglable à la tige pour ainsi régler les espacements et inclinaisons des plaques de support par rapport aux étais de support (20, 22), et

—une pluralité de barres de support des dispositifs d'actionnement (52a—e) fixées aux plaques de support, les barres de support recevant et supportant les dispositifs d'actionnement à fluide.

8. Appareil selon la revendication 7, dans lequel les plaques de support (38a—e) comportent une fente allongée (48) et les barres de support des dispositifs d'actionnement (52a—e) sont fixées aux plaques de support par des moyens de fixation à travers les fentes pour permettre le réglage des barres de support des dispositifs d'actionnement.

9. Procédé pour actionner, de façon commandable, des touches choisies d'un appareil commandé par clavier en réponse aux signaux provenant des moyens de commande (4), comprenant les étapes de:

—supporter une pluralité de dispositifs d'actionnement à fluide de verrouillage (60) adaptés pour être associées aux touches respectives d'un appareil commandé par clavier,

—communiquer une première pression de fluide par un conduit d'une pluralité de premiers conduits de fluide (79) audit dispositif d'actionnement ou auxdits dispositifs d'actionnement à fluide de verrouillage choisis (60) en réponse aux signaux des moyens de commande pour libérer les moyens de verrouillage (136) dans les dispositifs d'actionnement à fluide de verrouillage choisis, et

—communiquer une seconde pression de fluide par un conduit d'une pluralité de seconds conduits de fluide à un ou plusieurs dispositifs d'actionnement à fluide de verrouillage choisis (60) en réponse aux signaux des moyens de commande pour fournir une pression de fluide d'entraînement aux moyens formant piston (118) dans le ou les dispositifs d'actionnement à fluide de verrouillage choisis, grâce à quoi le ou lesdits dispositifs d'actionnement choisis associés à une ou à des touches choisies reçoivent, sélectivement, à la fois la première pression de fluide et la seconde pression de fluide pour déverrouiller les moyens formant piston et pour entraîner les moyens formant piston pour actionner la touche choisie du clavier à laquelle il est associé.

10. Procédé selon la revendication 9, dans lequel chaque dispositif d'actionnement à fluide de verrouillage est sensible à une paire de pressions de fluide communiquées par une paire de conduits de fluide, ladite paire de conduits de fluide comprenant un conduit de fluide (80) de la première pluralité de conduits de fluide et un conduit de fluide (par exemple 66a) de la seconde pluralité de conduits de fluide, et dans lequel ladite paire de conduits de fluide est unique pour chaque dispositif d'actionnement à fluide.

11. Procédé selon la revendication 9 ou la revendication 10, dans lequel la pluralité de dispositifs d'actionnement à fluide de verrouillage sont disposés en une matrice de rangées et de colonnes, et l'étape consistant à communiquer la première pression de fluide inclut la communication de la première pression de fluide à une rangée choisie des dispositifs d'actionnement à fluide de verrouillage et l'étape consistant à communiquer la seconde pression de fluide inclut la communication de la seconde pression de fluide à une colonne choisie des dispositifs d'actionnement à fluide de verrouillage.

12. Appareil selon la revendication 1, dans lequel les dispositifs d'actionnement à fluide comprennent:

—un cylindre (102) fermé à une extrémité et un organe de piston (118) disposé de façon étanche à l'intérieur du cylindre, l'organe de piston comportant une tige de piston (124) et des moyens d'engagement (126),

—des premiers moyens d'entrée de fluide (112) pour établir la communication de fluide à travers l'extrémité fermée du cylindre,

—un élément de verrouillage (136) ayant des première (142) et seconde (146) parties disposées sur des côtés opposés de la tige de piston et une partie (148, 150) les reliant,

—un organe sensible à un fluide (144) agissant contre la première ou la seconde partie de l'élément de verrouillage, des seconds moyens d'entrée de fluide pour établir la communication de fluide vers l'organe sensible à un fluide,

—des moyens formant ressort (140) pour appliquer une force de sollicitation contre l'autre des première et seconde parties de l'organe de verrouillage, l'organe de verrouillage (136) étant adapté pour engager les moyens d'engagement de l'organe de piston (126), les moyens d'engagement étant destinés à recevoir l'organe de verrouillage (136) pour éviter, dans une position de ce dernier, le déplacement de l'organe de piston, dans lequel ledit dispositif d'actionnement à fluide est seulement sensible quand la communication de fluide à travers lesdits premiers moyens d'entrée de fluide et la communication de fluide à travers lesdits seconds moyens d'entrée de fluide sont, à la fois, établies vers ledit dispositif d'actionnement à fluide.

13. Appareil selon la revendication 12, dans lequel l'organe sensible à une fluide comprend un diaphragme (144).

14. Appareil selon la revendication 12 ou la revendication 13, dans lequel l'élément de verrouillage comporte une ouverture (138) définie par les première et seconde parties (142, 146) et la partie de liaison (148, 150), l'ouverture recevant la tige de piston.

15. Appareil selon la revendication 12, la revendication 13 ou la revendication 14, comportant des moyens formant ressort de rappel (132) pour rappeler l'organe de piston (118) vers l'extrémité fermée du cylindre.

16. Procédé de test d'un clavier utilisant un appareil selon l'une quelconque des revendications 1 à 8 ou 12 à 15.

Fig. 1.

Fig. 3.

0 090 859

Fig. 2.

Fig. 4.

2

0 090 859

FiG.1.

FiG.5.

FiG.6.